## Europäisches Patentamt
## European Patent Office
## Office européen des brevets

(19)

(11) Numéro de publication: **0 112 228**
**B1**

(12) ## FASCICULE DE BREVET EUROPEEN

(45) Date de publication du fascicule du brevet:
**23.04.86**

(51) Int. Cl.⁴: **G 09 B 9/08**, G 09 B 9/04

(21) Numéro de dépôt: **83402324.4**

(22) Date de dépôt: **02.12.83**

(54) **Système de restitution d'effort pour simulation d'organes de conduite de véhicules.**

(30) Priorité: **14.12.82 FR 8220966**

(43) Date de publication de la demande:
**27.06.84 Bulletin 84/26**

(45) Mention de la délivrance du brevet:
**23.04.86 Bulletin 86/17**

(84) Etats contractants désignés:
**CH DE LI NL**

(56) Documents cités:
**GB - A - 762 826**
**US - A - 3 861 065**
**US - A - 3 973 332**

(73) Titulaire: **THOMSON-CSF, 173, Boulevard Haussmann, F-75379 Paris Cedex 08 (FR)**

(72) Inventeur: **Alet, Robert, THOMSON-CSF SCPI 173, bld Haussmann, F-75379 Paris Cedex 08 (FR)**
Inventeur: **Vignault, Eric, THOMSON-CSF SCPI 173, bld Haussmann, F-75379 Paris Cedex 08 (FR)**

(74) Mandataire: **Desperrier, Jean-Louis et al, THOMSON-CSF SCPI 19, avenue de Messine, F-75008 Paris (FR)**

ACTORUM AG

## Description

Le système de restitution d'effort selon l'invention se rapporte aux simulateurs d'entraînement et plus particulièrement à la simulation des organes de conduite de véhicules.

Pour des raisons d'économie, d'efficacité et de sécurité, la conduite des véhicules, et en particulier celle des engins blindés, est maintenant couramment enseignée non pas avec les véhicules réels, mais au moyen de simulateurs fixes d'entraînement.

Dans ces simulateurs les cabines de conduite sont fidèlement reproduites et souvent montées sur des plates-formes mobiles. Elles sont soumises de la part de ces dernières à des mouvements déterminés par des calculateurs en accord avec les manœuvres effectuées, l'état de la route ou celui des terrains supposés traversés.

Les organes de conduite, entre autres, sont simulés quant à leur disposition dans la cabine, à leur aspect et aussi quant aux efforts nécessaires à leur manœuvre et aux réactions que ces organes transmettent éventuellement au conducteur.

Ces organes de conduite ont des réactions qui leur sont propres. Celles-ci dépendent du type de véhicule, de la manœuvre en cours, de l'état de marche de l'organe de conduite, et de la manière suivant laquelle celui-ci est actionné. Une bonne connaissance de ces réactions permet de mieux observer le comportement du véhicule et de mieux agir en conséquence sur les organes de conduite. Il est donc essentiel que dans un simulateur d'entraînement les réactions mécaniques des organes de conduite, et aussi certaines de leurs pannes, puissent être simulées.

Le système de restitution d'effort selon l'invention concerne plus précisément la simulation des organes de conduite agissant par l'intermédiaire de commandes hydrauliques à haute pression. Il concerne ainsi, par exemple, la simulation des organes de freinage et aussi, dans le cas de certains engins blindés, la simulation des organes de direction dont les mouvements sont transmis par commande hydraulique et se traduisent par des efforts de freinage sur des systèmes à différentiel.

L'utilisation dans un simulateur d'entraînement d'un système réel de freinage n'est pas satisfaisante en raison de la complexité inutile de celui-ci, de son encombrement et de son coût.

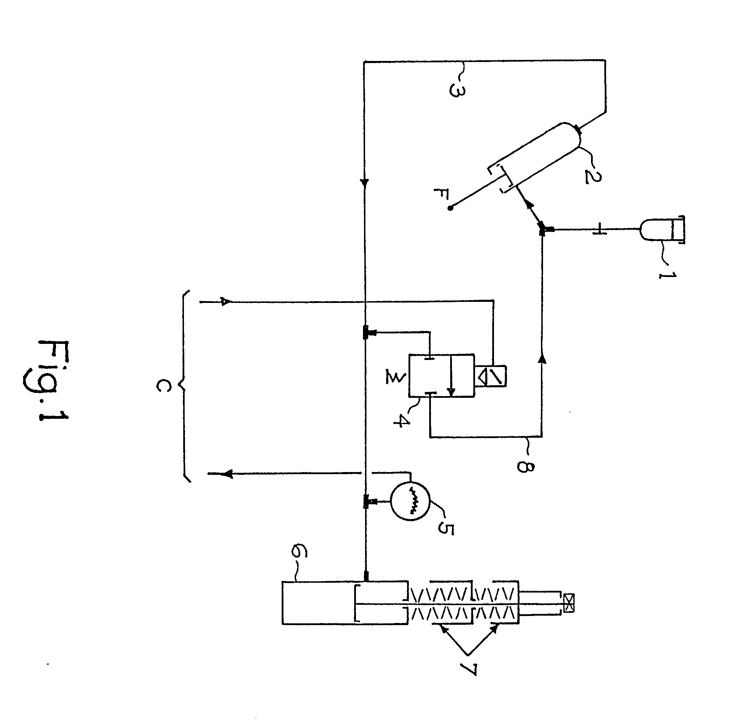

Des systèmes hydrauliques de restitution d'effort, du type représenté sur la fig. 1, ont déjà été utilisés dans les simulateurs. Leur principe de fonctionnement est assez semblable à celui des systèmes de freinage réels. Un maître-cylindre 2 transmet la force de freinage F, fournie par le conducteur, à un vérin 6 par l'intermédiaire d'une conduite 3 et de liquide hydraulique provenant d'un réservoir 1. Ce liquide actionne le vérin et provoque la compression d'un empilage de rondelles élastiques métalliques 7, du commerce, dont l'élasticité a été déterminée de façon à simuler la dilatation élastique des conduites réelles et la déformation des étriers de frein. Une électrovanne 4 commandée par un calculateur C permet, par une canalisation de retour 8 du liquide hydraulique au réservoir, de supprimer toute réaction ou raideur s'opposant à l'actionnement de la pédale, et de simuler ainsi une panne de freinage due à une fuite de liquide hydraulique. Un capteur de pression 5 transmet la valeur de la pression, qui peut atteindre 200 bar, au calculateur.

Bien qu'étant, en apparence, assez simple, ce système antérieur n'est pas satisfaisant. En effet, en raison de la pression atteinte, l'électrovanne, le vérin et le capteur de pression constituent des éléments coûteux. De plus, le vérin 6 et l'empilage de rondelles 7 forment un ensemble encombrant et d'un poids encore trop important. En effet, dans un simulateur de conduite, il peut être nécessaire d'utiliser quatre systèmes de restitution d'effort de ce type, à savoir deux pour la direction et deux pour les freins de route et de parc. Le poids et le volume des éléments montés dans la cabine, et en l'occurrence ceux des systèmes de restitution d'effort, conditionnent inévitablement les performances et le prix de la plate-forme mobile montée sur des vérins hydrauliques qui mettent en mouvement cet ensemble. Un autre inconvénient de ce type de système de restitution d'effort est de donner lieu éventuellement à des fuites de liquide hydraulique dans la cabine de conduite.

L'objet du système de restitution d'effort selon l'invention est de simuler la contre-réaction créée dans certaines commandes asservies de freinage hydraulique et destinée par une contre-pression à provoquer une force de freinage constante et simultanément une réaction constante de la pédale, dans un premier temps.

L'objet du système selon l'invention est également de simuler la déformation des étriers, l'élasticité des conduites soumises à la haute pression du liquide hydraulique et aussi la viscosité de celui-ci, par une raideur et un amortissement déterminés de la pédale de frein, dans un deuxième temps.

L'objet du système selon l'invention est encore de simuler une panne de freinage due à une fuite de liquide hydraulique.

Une caractéristique du système selon l'invention est de fournir la contre-pression, la raideur, l'amortissement et la panne de freinage, par une combinaison de moyens simples logés dans une enveloppe cylindrique simulant le maître-cylindre réel et dans laquelle, entre autres, sont obtenus la raideur et l'amortissement par un ressort en élastomère, la contre-pression par un piston soumis à de l'air comprimé et la panne de freinage grâce à l'effacement d'une butée mécanique par de l'air comprimé.

D'autres caractéristiques du système de restitution d'effort selon l'invention apparaîtront dans la description qui fait suite, exemple de réalisation non limitatif, et qui est illustrée par des figures dans lesquelles:

— la fig. 1 déjà citée représente un système de simulation de freinage connu;
— la fig. 2 représente l'effort E fourni par le conducteur sur la pédale en fonction de la course de celle-ci dans un simulateur de conduite comprenant un système de restitution d'effort selon l'invention;
— la fig. 3 représente l'effort Fc opposé par le système de restitution selon l'invention (rapport de multiplication 3);
— la fig. 4 représente le déplacement dXp du piston de contre-pression;
— la fig. 5 représente le système de restitution d'effort selon l'invention associé à divers éléments annexes et formant avec eux un simulateur de freinage.

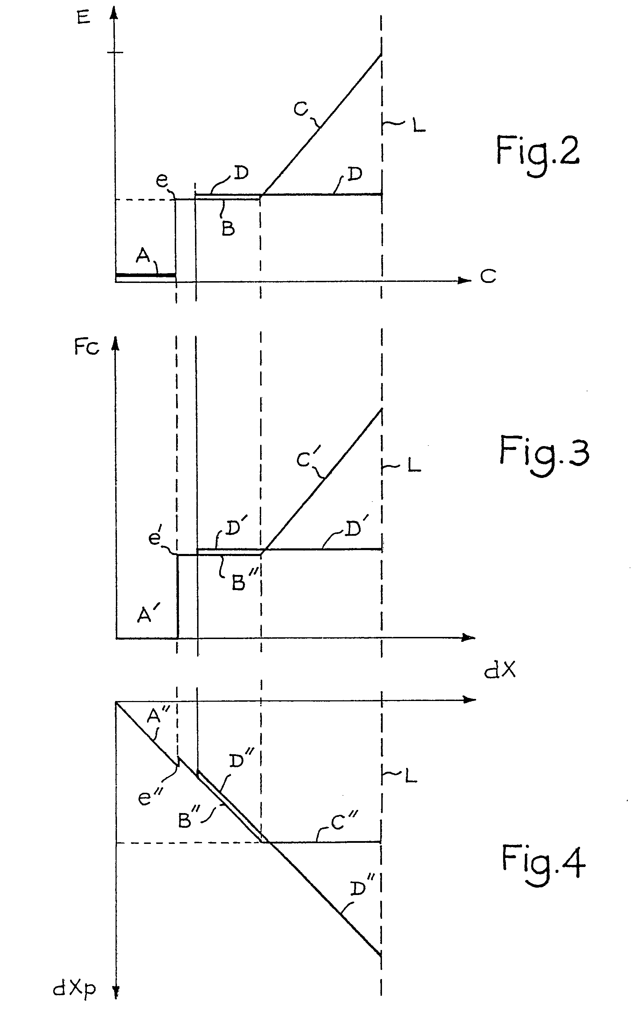

Le profil théorique de l'effort E développé par le conducteur à partir d'un système de restitution d'effort selon l'invention (fig. 2) est formé de segments de droite caractéristiques du système de freinage simulé. Il suppose des mouvements lents de la pédale et ne tient pas compte, entre autres, de l'effet de viscosité propre au liquide hydraulique et cependant restitué par le système selon l'invention.

Ce profil comporte en début de course de la pédale un segment A représentant un faible effort sensiblement constant qui constitue un rappel au repos de la pédale. Ce rappel est fourni, par exemple, par un ressort à grand allongement et à faible raideur associé à la pédale et qui ne fait pas partie de l'invention.

L'effort correspondant au freinage effectif est représenté par les segments B et C. Le segment B, à effort constant ou en palier, représente l'effet de la contre-réaction du système de freinage asservi simulé.

Le segment C représente la déformation des conduites hydrauliques, ainsi que celle des étriers maintenant les plaquettes contre les disques de frein.

Le segment D à effort constant simule une panne de freinage.

La décision d'une panne de freinage en cours d'exercice est prise par l'instructeur qui dirige l'entraînement. Dans tous les cas, la course de la pédale est limitée par une butée mécanique quelconque, ce qui est traduit sur les figures par une limite L.

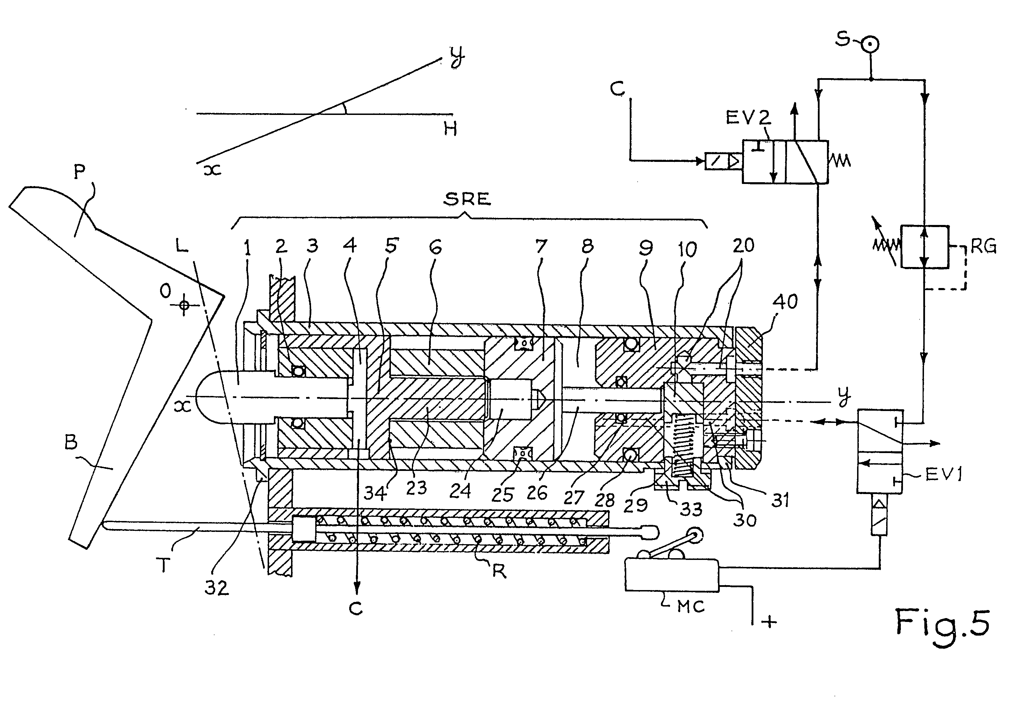

Le système de restitution d'effort selon l'invention est représenté sur la fig. 5 en coupe longitudinale et associé à divers éléments annexes (mécanismes, circuits pneumatiques ou électriques) et forme avec ceux-ci un simulateur de freinage.

Une pédale P de freinage tournant autour d'un axe O actionne par son bras B le système de restitution SRE, ainsi qu'une tige T qui commande un microcontacteur MC. Une source S d'air comprimé à 6 bar alimente le système SRE au moyen de deux électrovannes: une électrovanne EV1 est commandée par le microcontacteur MC, tandis qu'une électrovanne EV2 est commandée par le calculateur. A titre indicatif, l'axe xy du système SRE fait un angle aigu avec le plan horizontal H selon le schéma en exergue, ce qui explique la disposition en apparence inhabituelle et vers le haut de la pédale.

Le système SRE de restitution d'effort selon l'invention comprend une enveloppe cylindrique extérieure 3 dont les dimensions ne sont pas supérieures à celles d'un maître-cylindre réel. Cette enveloppe peut être éventuellement complétée extérieurement par certains éléments factices destinés à lui donner l'apparence plus réaliste d'un maître-cylindre. L'extrémité de l'enveloppe côté pédale comporte une collerette extérieure de montage 32 du système SRE, tandis que l'extrémité opposée à la pédale comporte une collerette d'appui 31, vers l'intérieur, qui supporte les efforts développés dans le système SRE.

Le système SRE comporte principalement, d'une part, coulissant dans l'enveloppe 3, une première pièce 5 et un piston 7, et, d'autre part, enfilée dans l'enveloppe mais rendue solidaire de celle-ci à l'extrémité opposée à la pédale, une seconde pièce 9. La première pièce 5 est conçue pour recevoir un poussoir 1, un capteur de pression 4 et un ressort en élastomère 6. Tournée d'une seule pièce, elle comprend deux parties coaxiales de diamètres différents. Celle de plus grand diamètre permet à la pièce de coulisser dans l'enveloppe et présente un chambrage coaxial. L'autre partie de plus faible diamètre constitue une tige 23 en opposition au chambrage. Les deux parties se raccordent en formant un épaulement et une surface annulaire transversale d'appui 34.

Le capteur de pression 4 est placé au fond du chambrage et s'y trouve maintenu par une bague 2. Cette bague présente un alésage axial dans lequel est placé le poussoir 1. La première pièce présente une fente transversale par laquelle le capteur de pression est introduit. Les fils de sortie du capteur passent par une fente longitudinale de l'enveloppe et transmettent au calculateur la valeur de l'effort Fc.

Un ressort 6 en élastomère et tubulaire est enfilé sur la tige 23. Son diamètre extérieur est déterminé de façon qu'une fois déformé par compression, ce ressort ne puisse venir en contact avec l'enveloppe. Sa longueur est sensiblement égale à celle de la tige. Les caractéristiques des ressorts en élastomère du commerce sont connues. Ces ressorts peuvent être usinés facilement pour obtenir une raideur déterminée (longueur et diamètre). Ils sont peu encombrants à énergie égale emmagasinée, et moins encombrants en particulier qu'un empilage de rondelles élastiques dont la raideur peut présenter des irrégularités non réalistes. De plus, les tolérances de fabrication des rondelles sont larges et, de ce fait, la raideur réalisée grâce à un tel empilage est très imprécise, de l'ordre de 20%. Les ressorts en élastomère procurent par ailleurs une impression de viscosité avec tout de même un retour au zéro satisfaisant.

Le piston, de révolution, comporte axialement et en opposition un chambrage 24 d'un diamètre légèrement supérieur à celui de la tige 23, ainsi qu'une partie cylindrique ou tige de piston 26. Il coulisse dans l'enveloppe et présente une gorge périphérique dans laquelle est placé un joint 25 capable de réaliser une étanchéité pneumatique avec l'enveloppe.

La seconde pièce 9 est maintenue appuyée, pendant le fonctionnement, contre la collerette 31 par les efforts développés dans le système SRE. De forme générale cylindrique, elle présente une première face disposée vers l'extérieur de l'enveloppe et par laquelle débouchent, entre autres, un conduit 20 et un conduit 30. Un chapeau 40 maintenu hermétiquement contre cette face porte les raccords des conduites d'air comprimé. La seconde face, vers l'intérieur de l'enveloppe, forme avec celle-ci et le piston une chambre de contre-pression 8. Cette chambre est alimentée par le conduit 30, vu sur la figure en pointillé, et traverse la pièce 9 d'une face à l'autre. La seconde face présente un alésage axial dont les dimensions sont déterminées pour que la tige 26 du piston puisse y coulisser. L'alésage axial débouche dans un alésage radial borgne dont le fond est mis en communication avec le conduit 20, par un perçage supplémentaire coaxial à l'alésage radial et d'un diamètre plus faible, identique à celui du conduit 20. Dans l'alésage radial coulisse une butée 10 cylindrique, maintenue par un ressort de rappel 29. Ce ressort 29 est comprimé entre la butée et un bouchon 33 vissé dans l'alésage radial et qui traverse l'enveloppe. Ce bouchon est lui-même percé de façon à permettre une évacuation de l'air à l'extérieur. La pièce 9 présente de plus deux gorges circulaires 27 et 28, dans lesquelles sont placés des joints qui assurent l'étanchéité de la chambre de contre-pression.

La description qui suit du fonctionnement du système de restitution d'effort selon l'invention est illustrée par les fig. 3 et 4. La fig. 3 représente l'effort Fc développé par le système SRE en fonction du déplacement dX de la première pièce 5, mesuré à partir de sa position de repos. La fig. 4 représente le déplacement dXp du piston à partir de sa position de repos, en fonction du déplacement dX. Les deux figures sont représentées en correspondance avec la fig. 2 et avec l'axe représentatif de la course de la pédale.

Au repos, la pédale est relevée par la tige T et le ressort R. La première pièce 5 se trouve à sa position la plus proche de la pédale, c'est-à-dire à sa position de repos. Le ressort 6, sans contrainte, est en contact avec la face d'appui de la première pièce et avec le piston 7. Les deux électrovannes sont en position d'échappement et la chambre de contre-pression n'est pas alimentée. La butée 10 est repoussée par le ressort 29 au fond de l'alésage radial dans l'axe de la tige du piston.

Lorsque le conducteur appuie sur la pédale, le bras B commence par déplacer la tige T en comprimant le ressort R. Le bras appuie ensuite sur le poussoir 1 qui transmet la poussée simultanément au capteur de pression 4, à la première pièce 5, au ressort 6 et au piston 7. L'ensemble de ces pièces, n'opposant pratiquement aucune résistance, se déplace dans l'enveloppe sans que le ressort 6 subisse une contrainte notable. Ce début de fonctionnement est représenté par les segments A, A' et A'' des fig. 2, 3 et 4.

Lorsque la tige T rencontre et abaisse le palpeur du microcontacteur MC, celui-ci commande le fonctionnement de l'électrovanne EV1 et par suite l'alimentation en air comprimé de la chambre de contre-pression 8. La contre-pression exercée contre le piston est transmise, par l'intermédiaire du ressort 6, à la première pièce et à la pédale. Elle se traduit par une montée brusque dans les courbes représentatives en e et e'. Le ressort 6 subit une contraction qui entraîne un léger retour du piston repéré en e' et e'' sur les fig. 3 et 4. La continuation de l'abaissement de la pédale est rendue par les paliers B et B' et par un segment oblique B'' en accord avec l'égalité des variations de déplacement de la première pièce et du piston. Après avoir pénétré dans la seconde pièce 9, la tige du piston rencontre la butée 10 et s'immobilise. Cet arrêt se traduit par le palier C'' de la fig. 4. Il en résulte un accroissement de la compression du ressort 6 entre la première pièce et le piston, qui est représenté par les segments C et C' (fig. 2 et 3) dont les pentes sont proportionnelles à la raideur du ressort.

Lorsque le conducteur relâche la pédale, les phénomènes décrits se reproduisent en sens inverse. La contre-pression repousse en particulier les pièces mobiles du système SRE vers leur position de repos.

L'instructeur peut introduire une panne de freinage dans l'exercice de conduite en l'affichant sur son pupitre de commande. Le calculateur du simulateur d'entraînement déclenche alors le fonctionnement de l'électrovanne EV2. L'air comprimé admis par le conduit 20 repousse la butée 10 contre le ressort 29. La tige 26, n'étant plus arrêtée par la butée, pénètre dans l'alésage radial de la seconde pièce 9, tandis que le piston n'oppose au ressort 6 que la force de contre-pression créée par l'air comprimé. Il en résulte des paliers d'effort D et D' sur les fig. 2 et 3, tandis que le piston effectue un déplacement dXp plus important que lors d'un freinage normal (D'', fig. 4). Cette panne de freinage ne peut être exécutée que si la tige du piston 26 n'est pas en appui sur la butée. Le calculateur ne commande donc le fonctionnement de l'électrovanne EV2 que si la valeur de l'effort supporté par le capteur n'est pas supérieure à celle qui est déterminée par le palier B'.

On peut montrer que l'utilisation d'un système de restitution d'effort selon l'invention, dans un système d'entraînement à la conduite de véhicule, procure des gains de poids et d'encombrement importants. Pour un engin blindé, par exemple, on constate une diminution de poids de 50 kg, d'une part, pour l'ensemble des systèmes de restitution d'effort et de 50 kg, d'autre part, pour la structure de la cabine, soit au total 100 kg environ. On constate également un gain de place de plus de 150 dm$^3$. Ce résultat est particulièrement intéressant, car il permet de diminuer les efforts développés par les vérins hydrauliques qui supportent la cabine, ou d'accroître leur accélération angulaire.

## Revendications

1. Système de restitution d'effort pour simulation d'organes de conduite de véhicules, caractérisé en ce qu'il comprend:
— une enveloppe cylindrique (3) ouverte à une extrémité et fermée à l'autre;
— une première pièce (5) coulissant dans ce cylindre pour recevoir par l'extrémité ouverte du cylindre la poussée exercée par le conducteur;
— un piston (7) coulissant dans le cylindre entre la première pièce et l'extrémité fermée du cylindre et délimitant avec cette extrémité fermée une chambre de contre-pression (8);
— un ressort tubulaire en élastomère (6) s'appuyant par ses extrémités respectivement sur la première pièce et le piston pour transmettre entre ceux-ci les poussées auxquelles ils·sont soumis;
— des moyens (T, MC, EV1) pour alimenter la chambre de contre-pression en air comprimé lorsque la première pièce atteint une position déterminée dans le cylindre.

2. Système selon la revendication 1, caractérisé en ce qu'il comprend en outre un poussoir (1) pour transmettre la poussée du conducteur à la première pièce (5) par l'intermédiaire d'un capteur de pression (4) qui permet de mesurer cette poussée.

3. Système selon l'une des revendications 1 ou 2, caractérisé en ce que l'extrémité fermée de l'enveloppe cylindrique (3) est obturée par une seconde pièce (9) qui comprend un alésage radial borgne, dans lequel est placée une butée escamotable (10), et un alésage axial, qui débouche dans l'alésage radial et dàns lequel s'engage une tige (26), qui prolonge le piston (7) et vient pénétrer dans l'alésage radial ou s'arrêter sur la butée escamotable selon la position de celle-ci; le dispositif comportant en outre des moyens (20, 29, 30, EV2) pour escamoter cette butée et la remettre en place sous la commande d'un signal extérieur.

4. Système selon la revendication 3, caractérisé en ce que les moyens de manœuvre de la butée escamotable comprennent une première électrovanne (EV2) pour alimenter en air comprimé un premier conduit (20) qui débouche dans le fond de l'alésage axial et repousser ainsi la butée vers l'orifice de cet alésage axial, et un premier ressort de rappel (29) maintenu par un bouchon (33) vissé dans l'alésage radial pour ramener la butée vers le fond de cet alésage radial.

5. Système selon l'une des revendications 1 à 4, caractérisé en ce que les moyens d'alimentation de la chambre de contre-pression (8) comprennent une tige (T) qui est manœuvrée simultanément avec la première pièce (5) contre un deuxième ressort de rappel (R) de faible raideur, un contacteur (MC) actionné par la tige au bout d'une course déterminée de celle-ci, et une deuxième électrovanne (EV1) commandée par le contacteur pour alimenter en air comprimé un deuxième conduit (30) qui communique avec la chambre de contre-pression (8).

## Patentansprüche

1. Gegendrucksystem zur Simulierung von Steuerorganen eines Fahrzeugs, dadurch gekennzeichnet, dass es aufweist:
— eine an einem Ende offene und am anderen Ende geschlossene zylindrische Hülle (3);
— ein erstes in diesem Zylinder gleitendes Stück (5), das über das offene Ende des Zylinders die vom Fahrer ausgeübte Kraft empfängt;
— einen in dem Zylinder zwischen dem ersten Stück und dem geschlossenen Ende des Zylinders in diesem gleitenden Kolben (7), der in Verbindung mit dem geschlossenen Ende eine Gegendruckkammer (8) begrenzt;
— eine rohrförmige Feder aus Elastomer (6), die mit einem Ende auf das erste Stück und mit dem anderen auf den Kolben drückt, um zwischen diesen Elementen die Kräfte zu übertragen, denen sie unterliegen;
— Mittel (T, MC, EV1) zur Versorgung der Gegendruckkammer mit Druckluft, wenn das erste Stück eine bestimmte Position im Zylinder erreicht.

2. System nach Anspruch 1, dadurch gekennzeichnet, dass es ausserdem ein Druckstück (1) aufweist, um den vom Fahrer ausgeübten Druck auf das erste Stück (5) über einen Drucksensor (4) zu übertragen, der eine Messung dieses Druckes erlaubt.

3. System nach einem der Ansprüche 1 oder 2, dadurch gekennzeichnet, dass das geschlossene Ende der zylindrischen Hülle (3) mit einem zweiten Stück (9) verschlossen ist, das ein radiales Sackloch, in dem ein entfernbarer Anschlag (10) angeordnet ist, und eine Axialbohrung aufweist, die in das radiale Loch mündet, wobei in dieses Loch ein Stab (26) eindringt, der den Kolben (7) verlängert und entweder in das radiale Loch eindringt oder am entfernbaren Anschlag je nach dessen Stellung angehalten wird, wobei die Vorrichtung ausserdem Mittel (20, 29, 30, EV2) aufweist, um diesen Anschlag unter Steuerung durch ein äusseres Signal herauszuziehen und wieder an seinen Platz zu bringen.

4. System nach Anspruch 3, dadurch gekennzeichnet, dass die Betätigungsmittel für den entfernbaren Anschlag ein erstes Elektroventil (EV2) zur Versorgung einer ersten, am Grund der axialen Bohrung mündenden Leitung (20) mit Druckluft, so dass der Anschlag gegen die Öffnung dieser axialen Bohrung gedrückt wird, und eine erste Rückstellfeder (29) aufweisen, die von einem in das radiale Loch geschraubten Stopfen (33) gehalten wird, um den Anschlag gegen den Boden dieses radialen Loches zu drücken.

5. System nach einem der Ansprüche 1 bis 4, dadurch gekennzeichnet, dass die Versorgungsmittel für die Gegendruckkammer (8) einen Stab (T), der gleichzeitig mit dem ersten Stück (5) gegen eine erste Rückstellfeder (R) geringer Federkraft betätigt wird, weiter einen Kontaktgeber (MC), der von dem Stab am Ende eines gegebenen Verstellwegs betätigt wird, und schliesslich ein zweites Elektroventil (EV1) aufweisen, das vom Kontaktgeber gesteuert wird, um eine zweite Leitung (30), die mit der Gegendruckkammer (8) in Verbindung steht, mit Druckluft zu versorgen.

## Claims

1. A force restoration system for the simulation of vehicle drive organs, characterized in that it comprises:
- a cylindrical envelope (3) which is open at one end and closed at the other end;
- a first member (5) sliding in said cylinder for receiving through the open end of the cylinder the pushing force exerted by the conductor;
- a piston (7) sliding in the cylinder between the first member and the closed end of the cylinder and delimiting with said closed end a counter-pressure chamber (8);
- a tubular spring made of elastomer material (6), one of its ends being applied against the first member and the other against the piston for transmitting therebetween the push forces to which they are submitted;
- means (T, MC, EV1) for supplying pressurized air to the counter-pressure chamber, if the first member has reached a predetermined position in the cylinder.

2. A system according to Claim 1, characterized in that it further comprises a press button (1) for transmitting the push force from the conductor to the first member (5) via a pressure sensor (4) which is able to measure said force.

3. A system according to any one of Claims 1 or 2, characterized in that the closed end of the cylindrical envelope (3) is obturated by a second member (9) which comprises a radial blind boring in which a removable stop (10) is located, and an axial boring, which opens into the radial boring and in which a rod (26) is engaged, this rod prolongating the piston (7) and penetrating into the radial boring or stopping at the removable stop according to the position of the latter; the device further comprising means (20, 29, 30, EV2) for withdrawing said stop and for replacing it under control of a signal from outside.

4. A system according to Claim 3, characterized in that the means for actuating the removable stop include a first electrovalve (EV2) for feeding pressurized air to a first duct (20) which ends at the bottom of the axial boring, and for thus repelling the stop towards the opening of said axial boring, and a first return spring (29) maintained in position by a plug (33) which is screwed into the radial boring, for returning the stop to the bottom of said radial boring.

5. A system according to any one of Claims 1 to 4, characterized in that the means for supplying air to the counter-pressure chamber (8) comprise a rod (T) which is actuated simultaneously with the first member (5) against a second return spring (R) of low rigidity, a contactor (MC) actuated by the rod at the end of a predetermined course thereof, and a second electrovalve (EV1) controlled by the contactor for supplying pressurized air to a second duct (30) communicating with the counter-pressure chamber (8).

Fig.1

Fig.2

Fig.3

Fig.4

Fig.5